# EUROPEAN PATENT SPECIFICATION

(11) **EP 1 243 671 B1**
(45) Date of publication and mention of the grant of the patent: **23.03.2016**
(21) Application number: 00974868.2
(22) Date of filing: 08.11.2000
(51) Int. Cl.: C25B 15/00, C25B 15/08, C25B 15/02, C25B 9/00, C25B 1/04

(54) **WATER ELECTROLYZING DEVICE**
WASSERELEKTROLYSE-VORRICHTUNG
DISPOSITIF D'ÉLECTROLYSE DE L'EAU

(30) Priority: 22.11.1999 JP 33142599
(43) Date of publication of application: 25.09.2002
(73) Proprietor: KOBELCO ECO-SOLUTIONS CO., LTD., Kobe-shi, Hyogo 651-0072 (JP)
(72) Inventor: HIRAI, Kiyoshi, Kakogawa-shi, Hyogo 675-0131 (JP); OI, Tsutomu, Akashi-shi, Hyogo 674-0084 (JP); YONEZAWA, Masaru, Takasago-shi, Hyogo 676-0801 (JP); MIYAKE, Akiko, Kobe-shi, Hyogo 654-0123 (JP); TOYOSHIMA, Manabu, Kobe-shi, Hyogo 654-0103 (JP); ISHII, Yutaka, Kobe-shi, Hyogo 654-0153 (JP)
(74) Representative: Isarpatent
(86) International application number: PCT/JP2000/007890
(87) International publication number: WO 2001/038608

(56) References cited:
- JP-A- 7 126 883
- US-A- 4 242 185

## Description

### FIELD OF THE INVENTION

This invention relates to a water electrolysis device of a solid electrolyte type.

### BACKGROUND ART

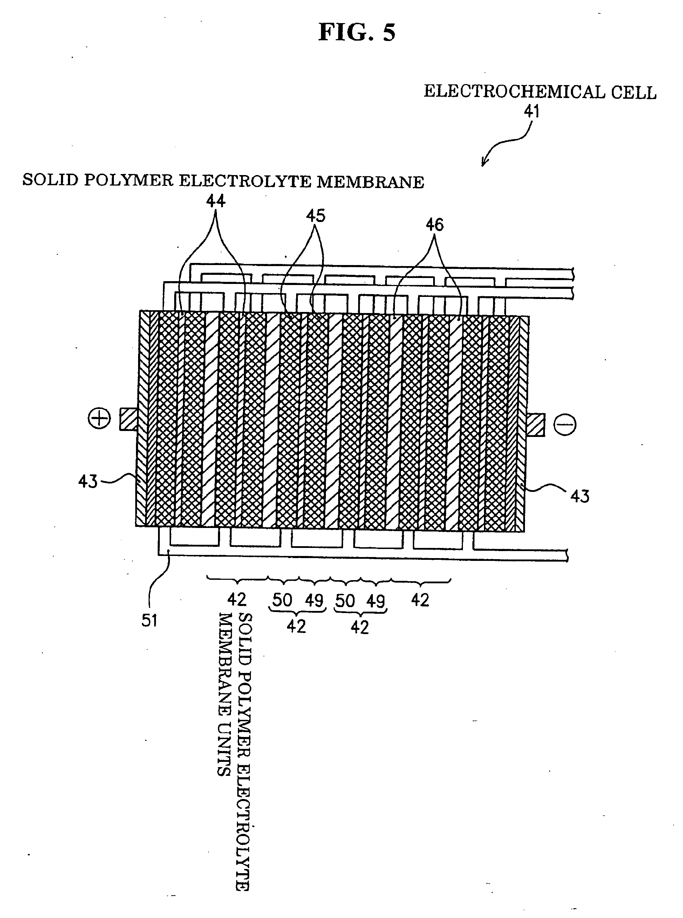

Recently, a highly efficient water electrolysis by means of a solid polymer electrolyte membrane has gained notice. FIG. 5 illustrates one example of the water electrolysis device of the solid polymer electrolyte type among those known heretofore. In FIG. 5, electrochemical cell 41 includes a number of solid polymer electrolyte membrane units 42 connected in tandem, and electrode end plates 43, 43 disposed at opposite ends for current-carrying. The solid polymer electrolyte membrane units 42 include as main parts solid polymer electrolyte membrane 44, porous electric current suppliers 45, 45 disposed on the opposite faces of the solid polymer electrolyte membrane 44, and bipolar electrode plates 46, 46 disposed on the outer sides of the porous electric current suppliers 45, 45. The solid polymer electrolyte membrane 44 is generally a polymer membrane made of a proton conductive material. Where voltage is applied across the electrode end plates 43, 43, the one face of the bipolar electrode plates 46, 46 acts as cathode and the opposite one acts as anode. Taking into account one bipolar electrode plate 46, that is a common component for adjacent solid polymer electrolyte membrane units 42,42.

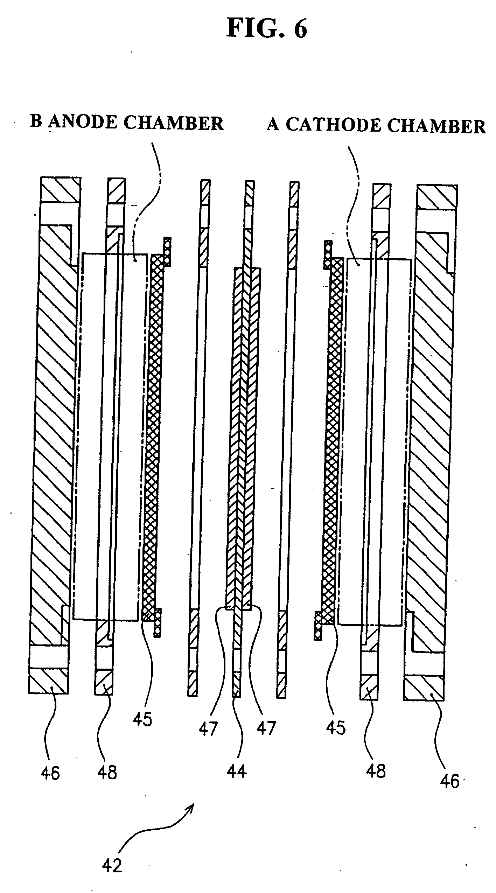

FIG. 6 is a disassembled cross sectional view of one solid polymer electrolyte membrane unit 42, in which the solid polymer electrolyte membrane 44 has opposite faces on which porous catalytic layers 47 are made of the platinum group metals. On the opposite sides of the solid polymer electrolyte membrane 44 are respectively formed spaces sealingly enclosed by the solid polymer electrolyte membrane 44, the bipolar electrode plates 46, 46 and annular gaskets 48, 48. These spaces respectively act as cathode chamber A and anode chamber B discussed later (those represented in chain double-dashed lines in FIG. 6). The cathode chamber A and the anode chamber B respectively accommodate the porous electric current suppliers 45, 45. As the solid polymer electrolyte membrane, it is preferable to use a cation exchange membrane (e.g., fluorocarbon-type sulfonic acid, cation ion-exchange membrane, such as Nafion 117 and Nafion 115 from DuPont).

Now, the description will be made for the operation of a conventional water electrolysis device. As illustrated in FIG. 5, where an electric current is sent across the electrode end plates 43, 43 so as to enable the electrode plate of the left hand side in FIG. 5 to act as anode and the electrode plate 43 of the right hand side to act as cathode, each of the bipolar electrode plates 46, 46 has a left side portion acting as cathode of one unit 42 and right side portion acting as anode of another unit 42. That is, one bipolar electrode plate 46 acts as a component of cathode-side 49 in the solid polymer electrolyte membrane unit 42 on the left hand side of the bipolar electrode plate 46, while acting as a component of anode-side 50 in the solid polymer electrolyte membrane unit 42 on the right hand side of the bipolar electrode plate 46. Thus, in each solid polymer electrolyte membrane unit 42, the cathode chamber A and the anode chamber B are respectively formed on the right and left hand sides of the solid polymer electrolyte membrane 44.

Where demineralized water is fed into the anode chamber B via demineralized-water feeding passage 51 (see FIG. 5) under the above state, the reaction 2H₂O→O₂+4H⁺4e⁻ takes place in the anode chamber B, generating oxygen gas. Protons generated in the anode chamber B move along with a small volume of water within the solid polymer electrolyte membrane 44, which has a proton conductivity, and reach the cathode chamber A. The protons which have reached the cathode chamber A cause the reaction 4H⁺ +4e⁻→2H₂, generating hydrogen gas.

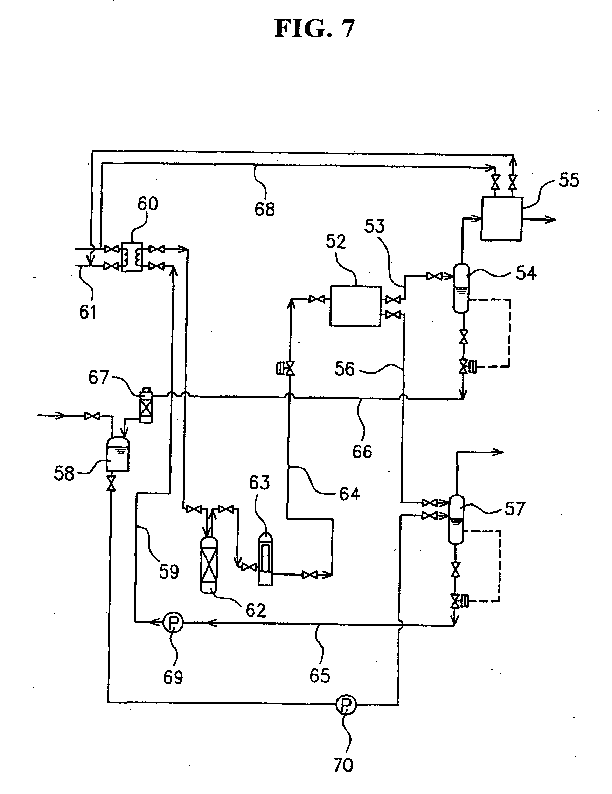

According to the hydrogen gas and oxygen gas generating process in the water electrolysis device of solid polymer electrolyte type as summarized above, hydrogen and oxygen generated by the process are fed to use points, following, for example, a flow as illustrated in FIG. 7. That is, in FIG. 7, hydrogen gas formed in electrochemical cell 52 flows through line 53 to hydrogen separation tank 54, where water is separated therefrom, and is fed to the respective use points via dehumidifier 55. On the other hand, oxygen gas formed in the electrochemical cell 52 flows through the line 56 to oxygen separation tank 57, where water is separated therefrom, and is released to the atmosphere.

Meanwhile, water electrolysis is carried out by sending a predetermined electric current in a predetermined voltage, and therefore it is preferable to increase energy efficiency (voltage efficiency × current efficiency) to reduce electric power consumption during the water electrolysis.

The current efficiency herein varies within the range of about 90-98% independently of temperature. On the other hand, the voltage efficiency is represented in theoretical working voltage/actual electrolysis voltage so that it has temperature dependency. That is, unless the electrolytic temperature is maintained at relatively high levels, the actual electrolysis voltage is increased, resulting in lowered voltage efficiency. Along with the development of an electrochemical cell with high performance, a maximum voltage efficiency, which was hitherto about 80%, can be improved to about 96%, provided that the electrolysis temperature is maintained between 80- 120°C.

However, in the conventional water electrolysis device, it is necessary to carry out the water electrolysis at a relatively low electrolytic temperature of 45°C for the reasons stated below. As a result, the energy efficiency was about 55%.

That is, demineralized water used for the water electrolysis is recycled in light of costs or the like. In order to properly carry out the water electrolysis while preventing contamination of a solid polymer electrolyte membrane by keeping the purity of the demineralized water for the water electrolysis constant, ions contained in the demineralized water must be removed. Generally, these ions are removed by using an ion exchange resin as an ion removing means. Since this ion exchange resin has a low heat resistance temperature (about 55°C), the electrolysis temperature was conventionally set at a relatively low temperature of about 45°C.

More specifically, in the conventional water electrolysis device, as shown in Fig. 7, demineralized water with oxygen gas separated therefrom at the oxygen separation tank 57 is fed into line 59 via line 65 and demineralized-water circulation pump 69. With heat exchanger 60 interposed in the line 59, demineralized water flowing in the line 59 is cooled to about 45°C by cooling water fed through line 61. Then, nonreproductive polisher 62 with an ion exchange resin interposed in the line 59 removes ions from the demineralized water to form a highly demineralized water, which is fed into the electrochemical cell 52 through filter 63 and line 64. In FIG. 7, the reference numerals 58 and 70 respectively represent demineralized-water tank and demineralized-water make-up pump for feeding demineralized make-up water to the oxygen separation tank 57 from the demineralized-water tank 58.

On the other hand, the demineralized water with hydrogen gas separated therefrom in the hydrogen separation tank 54 is introduced via line 66 into gas scrubber 67, in which hydrogen gas dissolved in the demineralized water is released, and returned to the demineralized-water tank 58. The hydrogen gas separated from the demineralized water in the hydrogen separation tank 54 is dehumidified by the dehumidifier 55 and then fed to a use point. In order to improve the efficiency in dehumidifying hydrogen gas at the dehumidifier 55, cooling water fed through the line 61 is drawn into the dehumidifier 55 via the line 68 in the water electrolysis device as illustrated in FIG. 7, thereby allowing the dehumidifier 55 to be kept at a lower temperature.

As described above, the conventional electrolysis device is designed only to lower the temperature of demineralized circulating water (generally about 85-120°C) or lower the temperature of moisture-containing hydrogen gas (generally 85-120°C), with no consideration of utilizing demineralized water discharged from the oxygen separation tank 57 or the hydrogen separation tank 54, as well as the thermal energy of moisture-containing hydrogen gas discharged from the hydrogen separation tank 54.

Japanese patent application No. JP 07-126883 A discloses an apparatus for electrolyzing water with a water electrolytic cell formed with a high molecular electrolyte membrane, a solar battery for supplying a power between the electrodes set in the cell, a separator for separating the generated gaseous oxygen and water, a separator for separating the generated gaseous hydrogen and water, a first circulating line formed with a first riser arranged between the cell on the anode side and the separator and a first downcommer set between the separator and cell and a second circulating line consisting of a second riser arranged between the cell on the cathode side and the separator and a second downcommer set between the separator and the cell.

As described above, there is a demand in these years for improvement in energy efficiency so as to reduce electric power consumption during the water electrolysis. In order to meet this demand, it is necessary to maintain a high temperature during the water electrolysis, thereby preventing lowering of the voltage efficiency, which has a high temperature dependency. For example, where a maximum energy efficiency of 94% is to be secured by maintaining a voltage efficiency of 96%, it is necessary to keep the electrolysis temperature in the range between about 80 and 120°C, as described above. On the contrary, the conventional water electrolysis device could not carry out the water electrolysis under such a high temperature due to the heat resistant temperature of the ion exchange resin (about 55°C).

The present invention was conceived in light of the problems inherent in the prior arts. It is an object of the present invention to provide a water electrolysis cell that is capable of reducing ion concentration of demineralized water to be fed into an electrochemical cell without using an ion exchange resin, and maintaining a high electrolysis temperature.

### SUMMARY OF THE INVENTION

In order to achieve the above object, there is provided a water electrolysis device that is capable of reducing ion concentration of demineralized water circulating in a demineralized water circulation line (hereinafter referred to "demineralized circulating water") by discharging a part of demineralized water with its purity deteriorated (ion concentration increased) from the circulation line to the outside, as well as feeding a predetermined volume of highly demineralized make-up water to the demineralized water circulation line via a demineralized water make-up line from the outside of the water electrolysis device, and at the same time increasing the temperature of the demineralized make-up water added to the demineralized circulating water and hence holding the electrolysis temperature at high levels by heat exchanging demineralized water of high temperature discharged to the outside with the demineralized make-up water fed into the demineralized water circulation line.

According to one aspect of the present invention, there is provided a water electrolysis device for generating hydrogen gas and oxygen gas by electrolyzing demineralized water in an electrochemical cell that includes: an oxygen separation tank for storing demineralized water to be fed to the electrochemical cell; a demineralized water circulation line for feeding demineralized water from the oxygen separation tank to the electrochemical cell and returning demineralized water, which has been electrolyzed and remains in the electrochemical cell, to the oxygen separation tank; a demineralized water make-up line for feeding demineralized make-up water from the outside of the water electrolysis device to at least any one of the oxygen separation tank and the demineralized water circulation line; a first heat exchanger interposed in the demineralized water make-up line; and a first demineralized water discharge line having a proximal end communicated with at least any one of the oxygen separation tank and the demineralized water circulation line, and a distal end extending through the first heat exchanger to the outside, in which heat transfer between the demineralized make-up water fed through the demineralized water make-up line and the demineralized water discharged to the outside through the first demineralized water discharge line is carried out at the first heat exchanger.

With the water electrolysis device having the above arrangement, a part of demineralized water flowing in the demineralized water circulation line is discharged through the first demineralized water discharge line, while highly demineralized make-up water is fed into the demineralized water circulation line through the demineralized water make-up line, so that the ion concentration of the demineralized circulating water flowing in the demineralized water circulation line can be reduced without using an ion exchange resin. Also, heat transfer between the demineralized water of high temperature (about 85- 120°C) discharged through the first demineralized water discharge line and the demineralized make-up water fed through the demineralized water make-up line is carried out, so that the temperature of the demineralized make-up water fed to the electrochemical cell through the demineralized water circulation line can be increased, thereby securing a high energy efficiency in the electrochemical cell.

Preferably, the water electrolysis device further includes: a hydrogen separation tank for receiving hydrogen gas generated in the electrochemical cell; a hydrogen discharge line having a proximal end connected with the hydrogen separation tank; and a preheat exchanger interposed in the hydrogen discharge line, in which heat transfer between the demineralized make-up water fed through the demineralized water make-up line and moisture-containing hydrogen gas discharged to the outside through the hydrogen discharge line is carried out at the preheat exchanger.

With the above arrangement, it is possible to more effectively utilize thermal energy disposed of, and hence further improve the energy efficiency during the water electrolysis. In addition, the moisture-containing hydrogen gas of high temperature (about 85-120°C) discharged from the hydrogen separation tank is cooled at the preheat exchanger by the demineralized make-up water which flows in the demineralized water make-up line. Whereby, water is condensed from the moisture-containing hydrogen gas. As a result, it is possible to reduce moisture carried to a dehumidifier disposed on the downstream side, and hence provide ease of dehumidifying at the dehumidifier and achieve downsizing of the dehumidifier itself.

More preferably, the water electrolysis device further includes: a hydrogen separation tank for receiving hydrogen gas generated in the electrochemical cell; and a second demineralized water discharge line having a proximal end communicated with the hydrogen separation tank and a distal end extending to the outside through the first heat exchanger, in which heat transfer between the demineralized make-up water fed through the demineralized water make-up line and demineralized water discharged to the outside through the first and second demineralized water discharge lines are carried out at the first heat exchanger.

With the above arrangement, the temperature of the demineralized make-up water fed to the electrochemical cell through the demineralized water make-up line can be further increased. As a result, it is possible to more easily secure a high energy efficiency during the water electrolysis.

Heat transfer between demineralized water of high temperature discharged to the outside through the first and second demineralized water discharge lines and demineralized make-up water fed through the demineralized water make-up line can be made by separate heat exchangers rather than the same heat exchanger.

With the above arrangement, flow controls for the flows of demineralized water discharged from the first and second demineralized water discharge lines to the respective heat exchangers can be made independently of each other, so that the flow controlling can be made in a stabilized manner.

Specifically, the water electrolysis device may further include: a hydrogen separation tank for receiving hydrogen gas generated in the electrochemical cell; a second demineralized water discharge line having a proximal end communicated with the hydrogen separation tank and a distal end extending to the outside; and a second heat exchanger interposed in the second demineralized water discharge line; in which heat transfer between the demineralized make-up water fed through the demineralized water make-up line and demineralized water discharged to the outside through the second demineralized water discharge line is carried out at the second heat exchanger.

More preferably, the demineralized water make-up line is divided into a first demineralized water make-up line and a second demineralized water make-up line on the upstream side of the first heat exchanger and the second heat exchanger, in which heat transfer between the demineralized water flowing in the first demineralized water make-up line and demineralized water flowing in the first demineralized water discharge line is carried out at the first heat exchanger, while heat transfer between demineralized water flowing in the second demineralized water make-up line and demineralized water flowing in the second demineralized water discharge line is carried out at the second heat exchanger.

With the above arrangement, heat transfer from demineralized water flowing in the first and second discharge lines to demineralized water flowing the demineralized water circulation line can be more efficiently made.

More preferably, at least 3.5% of the volume of demineralized water circulating in the demineralized water circulation line is discharged to the outside, and demineralized make-up water of a volume at least equivalent to the volume of demineralized water discharged to the outside is fed through the demineralized water make-up line.

With the above arrangement, the demineralized circulating water can have a specific resistance held at 5M Ω cm or more. As a result, increase of the electrolysis voltage during the water electrolysis can effectively be limited, thereby securing high energy efficiency.

### BRIEF DESCRIPTION OF THE DRAWINGS

FIG. 1 is an entire flow chart of the water electrolysis device according to an embodiment of the present invention.
FIG. 2 is a partial flow chart illustrating a modified example of a heat exchange method between demineralized water discharged to the outside and demineralized make-up water.
FIG. 3 is a partial flow chart illustrating another modified example of the heat exchange method between demineralized water discharged to the outside and demineralized make-up water.
FIG. 4 is a graph illustrating the relationship between the ratio of demineralized water passing the ion exchange resin to the entire volume of demineralized circulating water and the resistance of the demineralized circulating water.
FIG. 5 is a model view illustrating an example of the electrochemical cell used in the water electrolysis device of the solid polymer electrolyte type.
FIG. 6 is a disassembled cross section of a solid polymer electrolyte membrane unit in the electrochemical cell of FIG. 5.
FIG. 7 is an entire flow chart of the conventional water electrolysis device.

### DETAILED DESCRIPTION OF THE PREFERRED EMBODIMENTS

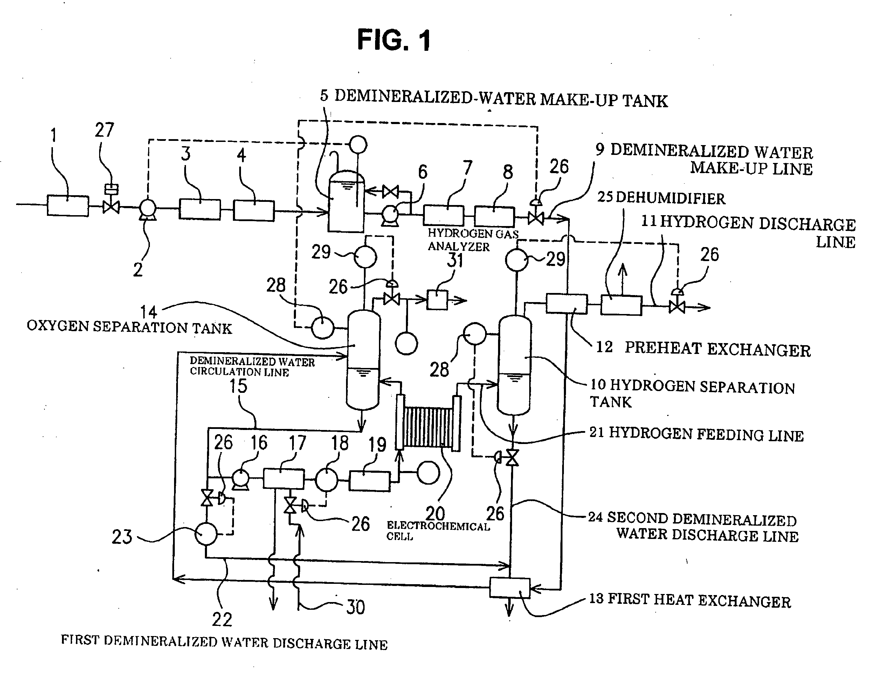

Embodiments of the present invention will be hereinafter described with reference to the drawings. FIG. 1 is an entire flow chart of the water electrolysis device according to one embodiment of the present invention.

As illustrated in FIG. 1, the water electrolysis device of this embodiment is designed so that demineralized water fed into electrochemical cell 20 via demineralized water make-up line 9 is electrolyzed in the electrochemical cell 20 to generate hydrogen gas and oxygen gas, which are then discharged to the outside respectively through hydrogen separation tank 10 and oxygen separation tank 14.

The water electrolysis device also includes demineralized water make-up line 9 for feeding demineralized make-up water to the oxygen separation tank 14, first heat exchanger 13 interposed in the demineralized water make-up line 9, demineralized water circulation line 15 extending from the oxygen separation tank 14 through the electrochemical cell 20 and returned to the oxygen separation tank 14, hydrogen feeding line 21 extending from the electrochemical cell 20 to the hydrogen separation tank 10, and first demineralized water discharge line 22 branched off from the demineralized water circulation line 15 and extending through the first heat exchanger 13 to the outside. The thus arranged first heat exchanger 13 is designed to exchange heat between demineralized make-up water fed through the demineralized water make-up line 9 and demineralized water discharged to the outside through the first demineralized water discharge line 22.

The water electrolysis device also includes hydrogen supply line 21 for supplying hydrogen generated in the electrochemical cell 20 to the hydrogen separation tank 10, and hydrogen discharge line 11 for taking off hydrogen separated from demineralized water in the hydrogen separation tank 10.

As illustrated in FIG. 1, interposed in the demineralized water make-up line 9 are prefilter 1, booster pump 2, first reverse osmosis membrane 3, second reverse osmosis membrane 4, demineralized-water make-up tank 5, pump 6, ion exchange device 7 (made of an ion exchange resin) and final filter 8.

Preferably, preheat exchanger 12 is interposed in the hydrogen discharge line 11 so that the demineralized water make-up line 9 can extend to the oxygen separation tank 14 through the preheat exchanger 12 and the first heat exchanger 13.

The demineralized water circulation line 15 runs in an endless loop so that demineralized water is fed from the oxygen separation tank 14 to the electrochemical cell 20, while oxygen generated and demineralized water remaining in the electrochemical cell 20 are returned to the oxygen separation tank 14. Reference numerals 16 and 19 in FIG. 1 respectively represent pump and final filter. The final filter 19 is optionally provided, depending on the purity of the demineralized water circulation line 15. If extraneous substances are not mixed into demineralized water in the demineralized water circulation line 15, the final filter 19 may be omitted.

Connected to the hydrogen separation tank 10 is second demineralized water discharge line 24 for discharging demineralized water with hydrogen gas removed therefrom. The first demineralized water discharge line 22 joined to the second demineralized water discharge line 24 through flow rate indicating/adjusting device 23 extends to the outside through the first heat exchanger 13.

Preferably, dehumidifier 25 is disposed on the downstream side of the preheat exchanger 12 in the hydrogen discharge line 11.

In FIG. 1, reference numerals 26 and 27 respectively represent flow control valves and on-off valve respectively installed in the corresponding lines.

Now, the description will be made for operation of the water electrolysis device. Tap water, which has been fed into the demineralized water make-up line 9 through its front end, is preliminarily filtered by the prefilter 1, increased in pressure by the booster pump 2 through the on-off valve 27, processed to have a high purity by the first reverse osmosis membrane 3 and the second reverse osmosis membrane 4, and then stored in the demineralized-water make-up tank 5. The demineralized water stored in the demineralized-water make-up tank 5 is fed into the oxygen separation tank 14 through the demineralized water make-up line 9 according to the water level of the oxygen separation tank 14.

In this embodiment, level monitor 28 for monitoring the water level of the oxygen separation tank 14 is provided, so that the opening of the flow control valve 26 installed in the demineralized water make-up line 9 is properly adjusted based upon a detected value of the level monitor 28. The demineralized water fed into the demineralized-water make-up tank 5 under pressure from the pump 6 is fed into the preheat exchanger 12 through the ion exchange device 7 and the final filter 8.

In the preheat exchanger 12, the heat is indirectly transferred between demineralized make-up water fed from the demineralized-water make-up tank 5 and moisture-containing hydrogen gas having a high temperature (about 85 to 120°C) discharged from the hydrogen separation tank 10 after the electrolyzing. That is, the demineralized make-up water is increased in temperature by a predetermined value upon receiving thermal energy from the moisture-containing hydrogen gas of high temperature. For example, demineralized make-up water fed, which initially had a temperature of 15-25°C, is varied to about 16-26°C by the preheat exchanger 12.

On the other hand, moisture-containing hydrogen gas in the hydrogen discharge line 11 is cooled by demineralized make-up water at the preheat exchanger 12, thereby generating condensed water from the moisture-containing hydrogen gas and hence reducing moisture carried to the dehumidifier 25 disposed on the downstream side of the hydrogen discharge line 11. Accordingly, the moisture to be removed by the dehumidifier 25 can be reduced, thereby achieving downsizing of the dehumidifier 25.

Preferably, the hydrogen discharge line 11 is designed so that the moisture-containing hydrogen gas flows from the lower side to the upper side within the preheat exchanger 12, and that the condensed water generated at the preheat exchanger 12 flows from the preheat exchanger 12 towards the hydrogen separation tank 10. This arrangement can achieve efficient use of demineralized water.

Hydrogen gas with moisture removed therefrom at the dehumidifier 25 is fed to the use point by the proper adjustment of the opening of the flow control valve 26 disposed in the hydrogen discharge line 11 according to a detected value of pressure indicating/adjusting device 29, which monitors the pressure within the hydrogen separation tank 10. Thus, hydrogen feeding pressure can be kept constant by controlling the flow rate of the hydrogen discharge line 11 according to the inner pressure of the hydrogen separation tank 10, and differential pressure between an H₂-side and an O₂-side in the electrochemical cell can be kept constant, thereby effectively preventing breakage of a solid polymer electrolyte membrane.

Demineralized make-up water with its temperature increased by a predetermined value at the preheat exchanger 12 is subjected at the first heat exchanger 13 to indirect heat exchange with demineralized water of high temperature (e.g., about 85- 120°C) discharged through the first demineralized water discharge line 22 and the second demineralized water discharge line 24. Whereby, demineralized water with its temperature varied to, for example, about 16-26°C by the preheat exchanger 12 is heated to about 82-119°C and fed into the oxygen separation tank 14.

In the water electrolysis device of this embodiment, demineralized water of high temperature is stored in the oxygen separation tank 14 acting as a demineralized water feeding source to the electrochemical cell 20. Accordingly, in this embodiment, an ion exchange resin cannot be used. Therefore, in this embodiment, the following arrangement is employed to prevent the purity (specific resistance) of demineralized water fed to the electrochemical cell 20 from falling below a predetermined value (e.g., 5MΩcm) without using the ion exchange resin.

That is, where the volume of demineralized water discharged through the first demineralized water discharge line 22, which has been branched off from the demineralized water circulation line 15, is designated as Q₁, and the volume of demineralized make-up water fed to the oxygen separation tank 14 through the demineralized water make-up line 9 is designated as Q₂, the openings of the flow control valves 26 disposed in the demineralized water make-up line 9 and the first demineralized water discharge line 22 are properly adjusted so as to have: Q₂≧Q₁.

In this embodiment, in order to keep the water level of the oxygen separation tank 14 constant, the flow rates of the respective lines are controlled. Specifically, the openings of the flow control valves 26 installed in the demineralized water make-up line 9 and the first demineralized water discharge line 22 are adjusted so that the volume Q₂ of demineralized make-up water fed to the oxygen separation tank 14 through the demineralized water make-up line 9 becomes equal to the sum (Q₁+Q₃) of the volume Q₃ of demineralized water fed to the hydrogen separation tank 10 (the volume of demineralized water flowing from the anode chamber B to the cathode chamber A in the solid polymer electrolyte membrane units 42) and the volume Q₁ of demineralized water discharged from the first demineralized water discharge line 22.

Now, the description will be made in detail for the relation between the volume of demineralized water discharged and the volume of demineralized make-up water.

In the case of using the ion exchange resin, the specific resistance of demineralized water is generally increased to 18MΩcm. Accordingly, if it is so designed to enable the total volume of demineralized water with its specific resistance lowered by using water electrolysis to flow through the ion exchange resin, the specific resistance of the demineralized water fed to the electrochemical cell is constantly kept at 18MΩcm.

On the other hand, the ion exchange resin has a heat resistant temperature of about 55°C. Accordingly, when the specific resistance of demineralized water is to be maintained by the ion exchange resin, it is necessary to limit the temperature of demineralized water fed to the electrochemical cell to about 55°C or lower. However, it is unlikely to achieve a sufficient energy efficiency if demineralized water to be fed to the electrochemical cell has a temperature of about 55°C or lower.

As a result of studies with intensive efforts by the present inventors, it has been found that unusual increase in electrolysis voltage during the water electrolysis can be prevented if demineralized water to be electrolyzed at the electrochemical cell has a specific resistance of 5MΩcm or more.

Based upon the above knowledge, the inventors set up a hypothesis that passing only a part of demineralized water through the ion exchange resin sufficiently allows the demineralized circulating water to have a specific resistance of 5MΩcm even if the total volume of the demineralized water used for electrolysis is not passed therethrough.

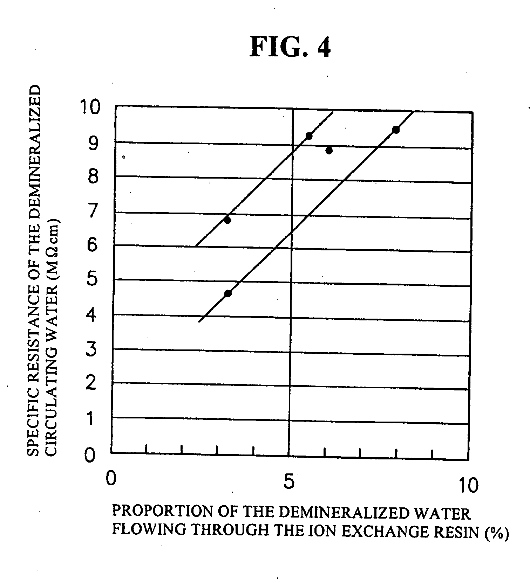

The inventors conducted a test described below to establish the hypothesis. That is, with demineralized circulating water to be used for the water electrolysis, the volume of the demineralized water circulating through the ion exchange resin was varied, and the relationship between the proportion of the demineralized water circulating through the ion exchange resin and the specific resistance of the whole demineralized circulating water was investigated. The test result is illustrated in FIG.4.

As illustrated in FIG. 4, the higher the proportion of the demineralized water flowing through the ion exchange resin with respect to the demineralized circulating water is, the higher the specific resistance of the demineralized circulating water is. It can be seen that at least 3.5% of the proportion of the demineralized water flowing through the ion exchange resin is enough to assure at least 5MΩcm of the specific resistance of the demineralized circulating water.

Meanwhile, the demineralized make-up water also has a specific resistance of 18MΩcm, which is the same as that of the demineralized water which has flown through the ion exchange resin. Accordingly, instead of making a part of the demineralized circulating water flow through the ion exchange resin, a part of the demineralized circulating water is discharged to the outside while highly demineralized water of a volume at least equivalent to the discharged volume is added to the demineralized circulating water, so that the specific resistance of the demineralized circulating water can be maintained. That is, at least 3.5% of the whole volume of the demineralized circulating water is discharged to the outside, and alternatively, highly demineralized make-up water having a volume at least equivalent to the discharged volume is fed to the demineralized water circulation line, so that the demineralized circulating water can retain a specific resistance of at least 5MΩcm without using the ion exchange resin.

Thus, in the water electrolysis device of this embodiment, there are provided the demineralized water circulation line 15 that is capable of feeding demineralized water from the oxygen separation tank 14 to the electrochemical cell 20 and returning the demineralized water remaining in the electrochemical cell 20 to the oxygen separation tank 14, the first demineralized water discharge line 22 that discharges a part of the demineralized water in the oxygen separation tank 14 to the outside, and the demineralized water make-up line 9 that feeds highly demineralized water to the oxygen separation tank 14. With the thus arranged water electrolysis device, the ion concentration of demineralized water to be fed to the electrochemical cell 20 can be lowered (or the specific resistance thereof is increased) despite of non-use of the ion exchange resin.

It is so designed that when a part of demineralized water in the oxygen separation tank 14, which contains demineralized water subjected to the water electrolysis and returned from the electrochemical cell 20, is discharged to the outside through the first demineralized water discharge line 22, thermal energy possessed by the demineralized water discharged to the outside is transmitted by the first heat exchanger 13 to highly demineralized water fed to the oxygen separation tank 14 through the demineralized water make-up line 9. Therefore, according to this embodiment, the temperature of the demineralized water fed to the electrochemical cell 20 can be kept higher than a predetermined level, enabling highly demineralized water having a high temperature to be fed to the electrochemical cell 20. Hence, the water electrolysis can be carried out with high energy efficiency.

Where the temperature of demineralized water circulating in the demineralized water circulation line 15 is heated to 80°C or higher, it is likely to disadvantageously cause deterioration of seal members such as O-rings, gaskets or the like, which are module components. Therefore, the temperature of demineralized water fed to the electrochemical cell 20 is preferably set lower than 80°C.

In this embodiment, heat exchanger 17 and thermometer 18 are interposed in the demineralized water circulation line 15 between the oxygen separation tank 14 and the electrochemical cell 20, in which the flow rate of cold water feeding line 30 connected with the heat exchanger 17 is adjusted by the flow control valve 26 so as to adjust the temperature of demineralized water detected by the thermometer 18 to 80°C or lower.

As an preferable arrangement, by making the pressure indicating/adjusting device 29 or the like detect the inner pressure of the oxygen separation tank 14, oxygen in the oxygen separation tank 14 is released to the atmosphere through the flow control valve 26 if the inner pressure exceeds a predetermined value. Whereby, the pressure in the oxygen separation tank 14 can be kept to a predetermined level or lower, thereby keeping constant the differential pressure between the H₂-side and the O₂-side in the electrochemical cell and hence effectively preventing breakage of the solid polymer electrolyte membrane. As a more preferable arrangement, as illustrated in FIG. 1, hydrogen gas analyzer 31 is provided in an oxygen releasing line to raise an alarm if the hydrogen concentration in the oxygen releasing line exceeds a predetermined value. This can effectively prevent dangerous events such as explosion caused by mixing of hydrogen and oxygen.

In this embodiment, as illustrated in FIG. 1, demineralized water in the first demineralized water discharge line 22 flows into demineralized water in the second demineralized water discharge line 24, and heat is exchanged with demineralized make-up water in the demineralized water make-up line 9 through the single heat exchanger 13. Alternatively to this, two heat exchangers may be provided to achieve heat exchanges independently of each other.

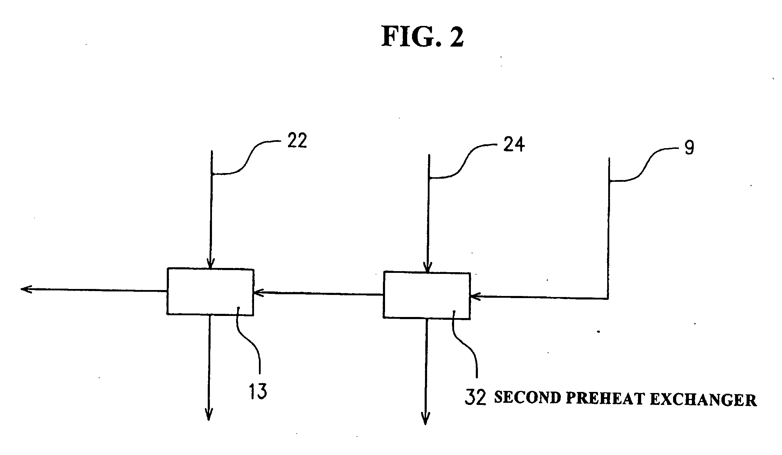

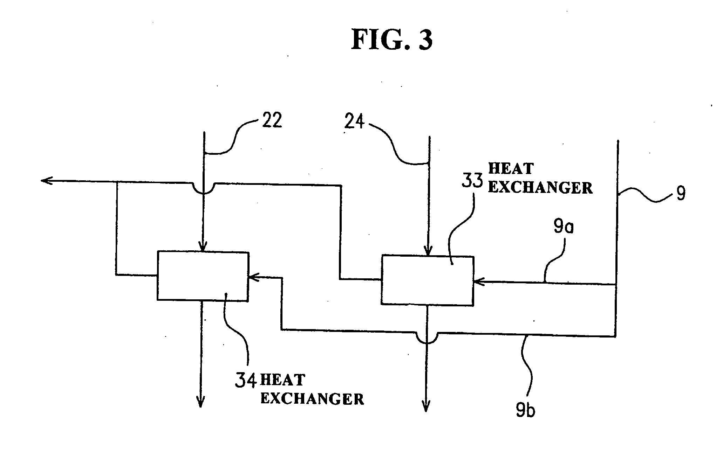

A method of independent heat exchange, which is achieved by an arrangement with second preheat exchanger 32 disposed on the front side of the first heat exchanger 13 in the demineralized water make-up line 9 as illustrated in FIG. 2, includes indirectly exchanging heat at the second preheat exchanger 32 between demineralized water discharged through the second demineralized water discharge line 24 and demineralized water flowing through the demineralized water make-up line 9, and indirectly exchanging heat at the first heat exchanger 13 between demineralized make-up water with its heat transferred at the second preheat exchanger 32 and demineralized water discharged through the first demineralized water discharge line 22. Alternatively, the method, which is achieved by an arrangement with the demineralized water make-up line 9 divided into two lines 9a, 9b, and heat exchangers 33, 34 respectively disposed in these lines, as illustrated in FIG. 3, includes indirectly exchanging heat at the heat exchanger 33 between demineralized water discharged through the second demineralized water discharge line 24 and demineralized make-up water flowing through the divided line 9a, and indirectly exchanging heat at the heat exchanger 34 between demineralized water discharged through the first demineralized water discharge line 22 and demineralized make-up water flowing through the divided line 9b. However, according to the former method, an efficient heat exchange may not be achieved since the temperature of the demineralized make-up water has greatly been increased at the second preheat exchanger 32. Therefore, the latter method is preferable in respect of the heat exchange efficiency

Thus, the arrangement, where the demineralized water discharged through the first demineralized water discharge line 22 and the demineralized water discharged through the second demineralized water discharge line 24 do not flow into each other, but are discharged to the outside independently of each other, can effectively prevent variation of the discharge rate due to difference in back pressure between the flow control valves 26 respectively installed in the first demineralized water discharge line 22 and the second demineralized water discharge line 24. As a result, the flow control can be stably performed.

Whether or not the first demineralized water discharge line 22 and the second demineralized water discharge line 24 are joined to each other, the discharged demineralized water with its heat transferred at the heat exchanger can be returned to the demineralized water make-up tank 5, thereby achieving reduced consumption of demineralized water.

In this embodiment, the first demineralized water discharge line 22 has a proximal end communicated with the demineralized water circulation line 15. However, the present invention is not necessarily limited to this embodiment. As far as a part of the residual demineralized water returned from the electrochemical cell 20 after electrolysis is discharged to the outside through the first demineralized water discharge line 22, various embodiments are applicable. For example, the proximal end of the first demineralized water discharge line 22 may be arranged in communication with the oxygen separation tank 14.

## Claims

1. A water electrolysis device for generating hydrogen gas and oxygen gas by electrolyzing demineralized water in an electrochemical cell (20) comprising:
an oxygen separation tank (14) for storing demineralized water to be fed to the electrochemical cell (20);
a demineralized water circulation line (15) for feeding demineralized water from the oxygen separation tank (14) to the electrochemical cell (20) and returning demineralized water, which has been electrolyzed and remains in the electrochemical cell (20), to the oxygen separation tank (14);
a demineralized water make-up line (9) for feeding demineralized make-up water from the outside of the water electrolysis device to at least any one of the oxygen separation tank (14) and the demineralized water circulation line (15);
a first heat exchanger (13); and
a first demineralized water discharge line (22) having a proximal end communicating with at least any one of the oxygen separation tank (14) and the demineralized water circulation line (15), and a distal end extending through the first heat exchanger (13) to the outside;
**characterized in that**
the first heat exchanger (13) is interposed in the demineralized water make-up line (9), and
a heat transfer between the demineralized make-up water fed through the demineralized water make-up line (9) and the demineralized water discharged to the outside through the first demineralized water discharge line (22) is carried out at the first heat exchanger (13).

2. A water electrolysis device according to claim 1 further comprising:
a hydrogen separation tank (10) for receiving hydrogen gas generated in the electrochemical cell (20);
a hydrogen discharge line (11) having a proximal end connected with the hydrogen separation tank (10); and
a preheat exchanger (12) interposed in the hydrogen discharge line (11);
wherein heat transfer between the demineralized make-up water fed through the demineralized water make-up line (9) and moisture-containing hydrogen gas discharged to the outside through the hydrogen discharge line (11) is carried out at the preheat exchanger (12).

3. A water electrolysis device according to claim 1 further comprising:
a hydrogen separation tank (10) for receiving hydrogen gas generated in the electrochemical cell (20); and
a second demineralized water discharge line (24) having a proximal end communicating with the hydrogen separation tank (10) and a distal end extending to the outside through the first heat exchanger (13);
wherein heat transfer between the demineralized make-up water fed through the demineralized water make-up line (9) and demineralized water discharged to the outside through the first and second demineralized water discharge lines (22, 24) is carried out at the first heat exchanger (13).

4. A water electrolysis device according to claim 1 further comprising:
a hydrogen separation tank (10) for receiving hydrogen gas generated in the electrochemical cell (20);
a second demineralized water discharge line (24) having a proximal end communicating with the hydrogen separation tank (10) and a distal end extending to the outside; and
a second heat exchanger interposed in the second demineralized water discharge line (24);
wherein heat transfer between the demineralized make-up water fed through the demineralized water make-up line (9) and demineralized water discharged to the outside through the second demineralized water discharge line (24) is carried out at the second heat exchanger.

5. A water electrolysis device according to claim 4, wherein:
the demineralized water make-up line (9) is divided into a first demineralized water make-up line and a second demineralized water make-up line on the upstream side of the first heat exchanger (13) and the second heat exchanger;
heat transfer between demineralized water flowing in the first demineralized water make-up line and demineralized water flowing in the first demineralized water discharge line (22) is carried out at the first heat exchanger (13); and
heat transfer between the demineralized water flowing in the second demineralized water make-up line and demineralized water flowing in the second demineralized water discharge line (24) is carried out at the second heat exchanger.

6. A water electrolysis device according to any one of claims 3 to 5 further comprising:
a hydrogen discharge line (11) having a proximal end connected with the hydrogen separation tank (10); and
a preheat exchanger (12) interposed in the hydrogen discharge line (11);
wherein heat transfer between the demineralized make-up water fed through the demineralized water make-up line (9) and moisture-containing hydrogen gas discharged to the outside through the hydrogen discharge line (11) is carried out at the preheat exchanger (12).

7. A water electrolysis device according to any one of claims 1 to 6, wherein at least 3.5% of demineralized water circulating in the demineralized water circulation line (15) is discharged to the outside, and demineralized make-up water of a volume at least equivalent to the demineralized water discharged to the outside is fed through the demineralized water make-up line (9).

## Patentansprüche

1. Wasser-Elektrolysevorrichtung zum Erzeugen von Wasserstoffgas und Sauerstoffgas durch Elektrolyse von entmineralisiertem Wasser in einer elektrochemischen Zelle (20), die Folgendes umfasst:
einen Sauerstofftrennbehälter (14) zum Bevorraten von entmineralisiertem Wasser, das der elektrochemischen Zelle (20) zuzuführen ist,
eine Zirkulationsleitung (15) für entmineralisiertes Wasser zum Zuführen des entmineralisierten Wassers aus dem Sauerstofftrennbehälter (14) zur elektrochemischen Zelle (20) und zum Rückführen des entmineralisierten Wassers, das elektrolysiert worden ist und in der elektrochemischen Zelle (20) verbleibt, zum Sauerstofftrennbehälter (14),
eine Zusatzleitung (9) für entmineralisiertes Wasser zum Zuführen von entmineralisiertem Zusatzwasser von außerhalb der Wasser-Elektrolysevorrichtung zu wenigstens einem aus dem Sauerstofftrennbehälter (14) und/oder der Zirkulationsleitung (15) für entmineralisiertes Wasser,
einen ersten Wärmetauscher (13) und
eine erste Abführleitung (22) für entmineralisiertes Wasser mit einem proximalen Ende, das mit wenigstens einem des Sauerstofftrennbehälters (14) und/oder der Zirkulationsleitung (15) für entmineralisiertes Wasser in Verbindung steht, und einem distalen Ende, das sich durch den ersten Wärmetauscher (13) nach außen erstreckt,
**dadurch gekennzeichnet, dass**
der erste Wärmetauscher (13) in der Zusatzleitung (9) für entmineralisiertes Wasser zwischengeschaltet ist und
eine Wärmeübertragung zwischen dem durch die Zusatzleitung (9) für entmineralisiertes Wasser zugeführten entmineralisierten Zusatzwasser und dem durch die erste Abführleitung (22) für entmineralisiertes Wasser nach außen abgeführten entmineralisierten Wasser am ersten Wärmetauscher (13) ausgeführt wird.

2. Wasser-Elektrolysevorrichtung nach Anspruch 1, die ferner Folgendes umfasst:
einen Wasserstofftrennbehälter (10) zum Aufnehmen des in der elektrochemischen Zelle (20) erzeugten Wasserstoffgases,
eine Wasserstoffabführleitung (11) mit einem mit dem Wasserstofftrennbehälter (10) verbundenen proximalen Ende und
einen in der Wasserstoffabführleitung (11) zwischengeschalteten Vorwärmetauscher (12),
wobei die Wärmeübertragung zwischen dem durch die Zusatzleitung (9) für entmineralisiertes Wasser zugeführten entmineralisierten Zusatzwasser und dem durch die Wasserstoffabführleitung (11) nach außen abgeführten feuchtigkeitshaltigen Wasserstoffgas am Vorwärmetauscher (12) ausgeführt wird.

3. Wasser-Elektrolysevorrichtung nach Anspruch 1, die ferner Folgendes umfasst:
einen Wasserstofftrennbehälter (10) zum Aufnehmen von in der elektrochemischen Zelle (20) erzeugtem Wasserstoffgas und
eine zweite Abführleitung (24) für entmineralisiertes Wasser mit einem proximalen Ende, das mit dem Wasserstofftrennbehälter (10) in Verbindung steht, und
einem distalen Ende, das sich durch den ersten Wärmetauscher (13) nach außen erstreckt,
wobei die Wärmeübertragung zwischen dem durch die Zusatzleitung (9) für entmineralisiertes Wasser zugeführten entmineralisierten Zusatzwasser und dem durch die erste und die zweite Abführleitung (22, 24) für entmineralisiertes Wasser nach außen abgeführten entmineralisierten Wasser am ersten Wärmetauscher (13) ausgeführt wird.

4. Wasser-Elektrolysevorrichtung nach Anspruch 1, die ferner Folgendes umfasst:
einen Wasserstofftrennbehälter (10) zum Aufnehmen von in der elektrochemischen Zelle (20) erzeugtem Wasserstoffgas,
eine zweite Abführleitung (24) für entmineralisiertes Wasser mit einem proximalen Ende, das mit dem Wasserstofftrennbehälter (10) in Verbindung steht, und
einem distalen Ende, das sich nach außen erstreckt, und
einen in der zweiten Abführleitung (24) für entmineralisiertes Wasser zwischengeschalteten zweiten Wärmetauscher,
wobei die Wärmeübertragung zwischen dem durch die Zusatzleitung (9) für entmineralisiertes Wasser zugeführten entmineralisierten Zusatzwasser und dem durch die zweite Abführleitung (24) für entmineralisiertes Wasser nach außen abgeführten entmineralisierten Wasser am zweiten Wärmetauscher ausgeführt wird.

5. Wasser-Elektrolysevorrichtung nach Anspruch 4, wobei die Zusatzleitung (9) für entmineralisiertes Wasser in eine erste Zusatzleitung für entmineralisiertes Wasser und eine zweite Zusatzleitung für entmineralisiertes Wasser auf der stromaufwärtigen Seite des ersten Wärmetauschers (13) und des zweiten Wärmetauschers aufgeteilt ist,
die Wärmeübertragung zwischen dem in der ersten Zusatzleitung für entmineralisiertes Wasser fließenden entmineralisierten Wasser und dem in der ersten Abführleitung (22) für entmineralisiertes Wasser fließenden entmineralisierten Wasser am ersten Wärmetauscher (13) ausgeführt wird und
die Wärmeübertragung zwischen dem in der zweiten Zusatzleitung für entmineralisiertes Wasser fließenden entmineralisierten Wasser und dem in der zweiten Abführleitung (24) für entmineralisiertes Wasser fließenden entmineralisierten Wasser am zweiten Wärmetauscher ausgeführt wird.

6. Wasser-Elektrolysevorrichtung nach einem der Ansprüche 3 bis 5, die ferner Folgendes umfasst:
eine Wasserstoffabführleitung (11) mit einem mit dem Wasserstofftrennbehälter (10) verbundenen proximalen Ende und
einen in der Wasserstoffabführleitung (11) zwischengeschalteten Vorwärmetauscher (12),
wobei die Wärmeübertragung zwischen dem durch die Zusatzleitung (9) für entmineralisiertes Wasser zugeführten entmineralisierten Zusatzwasser und dem durch die Wasserstoffabführleitung (11) nach außen abgeführten feuchtigkeitshaltigen Wasserstoffgas am Vorwärmetauscher (12) ausgeführt wird.

7. Wasser-Elektrolysevorrichtung nach einem der Ansprüche 1 bis 6, wobei mindestens 3,5 % des in der Zirkulationsleitung (15) für entmineralisiertes Wasser zirkulierenden entmineralisierten Wassers nach außen abgeführt wird und entmineralisiertes Zusatzwasser mit einem Volumen mindestens äquivalent zum nach außen abgeführten entmineralisierten Wasser durch die Zusatzleitung (9) für entmineralisiertes Wasser zugeführt wird.

## Revendications

1. Dispositif d'électrolyse de l'eau destiné à produire du gaz hydrogène et du gaz oxygène par électrolyse d'eau déminéralisée dans une cellule électrochimique (20), comprenant :
une cuve de séparation d'oxygène (14) destinée à stocker l'eau déminéralisée devant alimenter la cellule électrochimique (20) ;
une conduite de circulation d'eau déminéralisée (15) destinée à acheminer de l'eau déminéralisée de la cuve de séparation d'oxygène (14) à la cellule électrochimique (20) et à renvoyer l'eau déminéralisée qui a été électrolysée et qui reste dans la cellule électrochimique (20), dans la cuve de séparation d'oxygène (14) ;
une conduite de réalimentation en eau déminéralisée (9) destinée à acheminer de l'eau déminéralisée d'appoint depuis l'extérieur du dispositif d'électrolyse de l'eau jusqu'à au moins l'une quelconque de la cuve de séparation d'oxygène (14) et de la conduite de circulation d'eau déminéralisée (15) ;
un premier échangeur de chaleur (13) ; et
une première conduite d'évacuation d'eau déminéralisée (22) dont une extrémité proximale communique avec au moins l'une quelconque de la cuve de séparation d'oxygène (14) et de la conduite de circulation d'eau déminéralisée (15), et dont une extrémité distale s'étend via le premier échangeur de chaleur (13) vers l'extérieur ;
**caractérisé en ce que**
le premier échangeur de chaleur (13) est intercalé sur la conduite de réalimentation en eau déminéralisée (9), et
un transfert de chaleur entre l'eau déminéralisée d'appoint acheminée par la conduite de réalimentation en eau déminéralisée (9) et l'eau déminéralisée évacuée vers l'extérieur par l'intermédiaire de la première conduite d'évacuation d'eau déminéralisée (22) s'effectue au niveau du premier échangeur de chaleur (13).

2. Dispositif d'électrolyse de l'eau selon la revendication 1, comprenant en outre :
une cuve de séparation d'hydrogène (10) destinée à recevoir du gaz hydrogène produit dans la cellule électrochimique (20) ;
une conduite d'évacuation d'hydrogène (11) dont une extrémité proximale est raccordée à la cuve de séparation d'hydrogène (10) ; et
un échangeur de préchauffage (12) intercalé sur la conduite d'évacuation d'hydrogène (11) ;
dans lequel le transfert de chaleur entre l'eau déminéralisée d'appoint acheminée par la conduite de réalimentation en eau déminéralisée (9) et le gaz hydrogène contenant de l'humidité évacué vers l'extérieur par l'intermédiaire de la conduite d'évacuation d'hydrogène (11) s'effectue au niveau de l'échangeur de préchauffage (12).

3. Dispositif d'électrolyse de l'eau selon la revendication 1, comprenant en outre :
une cuve de séparation d'hydrogène (10) destinée à recevoir du gaz hydrogène produit dans la cellule électrochimique (20) ; et
une seconde conduite d'évacuation d'eau déminéralisée (24) dont une extrémité proximale communique avec la cuve de séparation d'hydrogène (10) et dont une extrémité distale s'étend vers l'extérieur via le premier échangeur de chaleur (13) ;
dans lequel le transfert de chaleur entre l'eau déminéralisée d'appoint acheminée par la conduite de réalimentation en eau déminéralisée (9) et l'eau déminéralisée évacuée vers l'extérieur par l'intermédiaire des première et seconde conduites d'évacuation d'eau déminéralisée (22, 24) s'effectue au niveau du premier échangeur de chaleur (13).

4. Dispositif d'électrolyse de l'eau selon la revendication 1, comprenant en outre :
une cuve de séparation d'hydrogène (10) destinée à recevoir du gaz hydrogène produit dans la cellule électrochimique (20) ;
une seconde conduite d'évacuation d'eau déminéralisée (24) dont une extrémité proximale communique avec la cuve de séparation d'hydrogène (10) et dont une extrémité distale s'étend vers l'extérieur ; et
un second échangeur de chaleur intercalé sur la seconde conduite d'évacuation d'eau déminéralisée (24) ;
dans lequel le transfert de chaleur entre l'eau déminéralisée d'appoint acheminée par la conduite de réalimentation en eau déminéralisée (9) et l'eau déminéralisée évacuée vers l'extérieur par l'intermédiaire de la seconde conduite d'évacuation d'eau déminéralisée (24) s'effectue au niveau du second échangeur de chaleur.

5. Dispositif d'électrolyse de l'eau selon la revendication 4, dans lequel :
la conduite de réalimentation en eau déminéralisée (9) se subdivise en une première conduite de réalimentation en eau déminéralisée et en une seconde conduite de réalimentation en eau déminéralisée sur le côté amont du premier échangeur de chaleur (13) et du second échangeur de chaleur ;
le transfert de chaleur entre l'eau déminéralisée s'écoulant dans la première conduite de réalimentation en eau déminéralisée et l'eau déminéralisée s'écoulant dans la première conduite d'évacuation d'eau déminéralisée (22) s'effectue au niveau du premier échangeur (13) ; et
le transfert de chaleur entre l'eau déminéralisée s'écoulant dans la seconde conduite de réalimentation en eau déminéralisée et l'eau déminéralisée s'écoulant dans la seconde conduite d'évacuation d'eau déminéralisée (24) s'effectue au niveau du second échangeur de chaleur.

6. Dispositif d'électrolyse de l'eau selon l'une quelconque des revendications 3 à 5, comprenant, en outre :
une conduite d'évacuation d'hydrogène (11) dont une extrémité proximale est raccordée à la cuve de séparation d'hydrogène (10) ; et
un échangeur de préchauffage (12) intercalé sur la conduite d'évacuation d'hydrogène (11) ;
dans lequel le transfert de chaleur entre l'eau déminéralisée d'appoint acheminée par la conduite de réalimentation en eau déminéralisée (9) et le gaz hydrogène contenant de l'humidité évacué vers l'extérieur par l'intermédiaire de la conduite d'évacuation d'hydrogène (11) s'effectue au niveau de l'échangeur de préchauffage (12).

7. Dispositif d'électrolyse de l'eau selon l'une quelconque des revendications 1 à 6, dans lequel au moins 3,5 % de l'eau déminéralisée circulant dans la conduite de circulation d'eau déminéralisée (15) sont évacués vers l'extérieur, et de l'eau déminéralisée d'appoint en un volume au moins équivalent à celui de l'eau déminéralisée évacuée vers l'extérieur est acheminée par la conduite de réalimentation en eau déminéralisée (9).
